# FASCICULE DE BREVET EUROPEEN

(11) **EP 1 786 090 B1**
(45) Date de publication et mention de la délivrance du brevet: **02.07.2014**
(21) Numéro de dépôt: 06115054.6
(22) Date de dépôt: 07.06.2006
(51) Int. Cl.: H02M 7/5387

(54) **Procédé de commande d'un onduleur de tension polyphase**
Steuerverfahren für Mehrphasenwechselrichter
Control method for poliphase inverter

(30) Priorité: 29.07.2005 FR 0508189
(43) Date de publication de la demande: 16.05.2007
(73) Titulaire: VALEO EQUIPEMENTS ELECTRIQUES MOTEUR, 94017 Créteil Cedex (FR)
(72) Inventeur: Hobraiche, Julien, 60200, Compiegne (FR); Vilain, Jean-Paul, 60150, Melicocq (FR)
(74) Mandataire: de Lambilly Delorme, Marie Pierre

(56) Documents cités:
- PATENT ABSTRACTS OF JAPAN vol. 011, no. 110 (E-496), 7 avril 1987 (1987-04-07) & JP 61, 258677, A, (MITSUBISHI ELECTRIC CORP), 17 novembre 1986 (1986-11-17)
- PATENT ABSTRACTS OF JAPAN vol. 010, no. 356 (E-459), 29 novembre 1986 (1986-11-29) & JP 61, 154483, A, (MITSUBISHI ELECTRIC CORP), 14 juillet 1986 (1986-07-14)
- PATENT ABSTRACTS OF JAPAN vol. 005, no. 121 (E-068), 5 août 1981 (1981-08-05) & JP 56, 058781, A, (HITACHI LTD), 21 mai 1981 (1981-05-21)

## Description

### Domaine de l'invention

L'invention concerne un procédé de commande d'un onduleur de tension polyphasé. La présente invention trouve des applications particulièrement avantageuses, mais non exclusives, dans les domaines du secteur automobile, du secteur aéronautique, du secteur industriel.

Un but de l'invention est de stabiliser la tension en amont de l'onduleur pour réduire la taille du condensateur de découplage.

L'invention a également pour but de conserver un contrôle de la charge polyphasée en aval de l'onduleur tout en réduisant les pertes dans l'onduleur.

Elle concerne aussi un dispositif mettant en oeuvre ledit procédé de commande d'un onduleur de tension polyphasé.

### Etat de la technique

Actuellement, les onduleurs de tension polyphasés sont utilisés pour l'entraînement de charges électrique polyphasées. Ces charges électriques sont par exemple des machines réversibles telles que des alterno-démarreurs. L'onduleur de tension polyphasé est un convertisseur continu - alternatif. Il est relié en amont à une source d'alimentation continue et raccordé en aval aux enroulements de phase de la charge. L'onduleur est alimenté en énergie par la source d'alimentation continue. Il est piloté en modulation de largeur d'impulsions par une logique de commande.

L'onduleur comporte plusieurs bras de pont comportant, par exemple, chacun deux interrupteurs statiques munis de diodes de roue libre, i.e. deux niveaux. Le point milieu de chaque couple d'interrupteurs d'un même bras de pont est relié à un enroulement de phase de la charge. La logique de commande permet de commander les interrupteurs d'un même bras de pont pour éviter de mettre en court-circuit la source d'alimentation, par exemple en les commandant de manière complémentaire.

Il existe plusieurs techniques de pilotage de l'onduleur polyphasé notamment le contrôle en tension de la charge ou le contrôle en courant de la charge. Pour stabiliser la tension en côté amont de l'onduleur, selon les techniques de pilotages connues, l'onduleur comporte en amont un condensateur de découplage. Ce condensateur de découplage permet de filtrer le courant, subissant de fortes discontinuités, entrant dans l'onduleur. Ce condensateur de découplage a une forte capacité pour maintenir constante la tension d'entrée de l'onduleur et pour éviter des effets d'oscillations. La taille physique du condensateur de découplage est très importante. Un tel condensateur de découplage pose des problèmes d'encombrement pour des applications dans un espace restreint.

Pour diminuer la taille physique du condensateur de découplage, on utilise actuellement des condensateurs à forte capacité volumique, tels que des condensateurs électrochimiques. Toutefois ces condensateurs présentent un manque de fiabilité notamment dans des environnements à forte température ou humide.

De plus, la réalisation de ces condensateurs de découplage demande la mise en oeuvre de technologies onéreuses, du fait de spécifications exigeantes. Cette technologie onéreuse augmente le coût global de l'onduleur polyphasé.

Les techniques de pilotage présentées ci-dessus ne permettent ainsi pas une stabilisation de la tension de la partie amont de l'onduleur.

Le document JP 61,258 677 montre un procédé correspondant au préambule de la revendication 1.

### Exposé de l'invention

La présente invention à pour objet de remédier à ces problèmes de technologie onéreuse, d'encombrement, de fiabilité et de stabilisation de la tension de la partie amont de l'onduleur pour réduire la taille du condensateur de découplage. Pour cela, l'invention propose un procédé de commande de l'onduleur de tension polyphasé permettant de limiter les ondulations de la tension de la source continue tout en assurant un pilotage de la charge électrique polyphasée lorsque la capacité de filtrage employée n'assure pas une inertie en tension suffisante pour rendre la tension continue constante. En outre, ce procédé permet une minimisation des pertes dans l'onduleur de tension polyphasé.

Autrement dit, les techniques de pilotages de l'invention contrôlent ce qui se passe au niveau amont en plus de ce qui se passe au niveau aval. Ces techniques de pilotages permettent la maîtrise des ondulations de la tension de la source continue quand le condensateur de découplage est de faible capacité.

Pour ce faire, on produit une structure spatiale prenant en compte les contraintes aval et amont de l'onduleur. Plus particulièrement une contrainte amont porte sur la tension de la source d'alimentation à l'entrée de l'onduleur. On produit aussi un vecteur d'erreur. Ainsi, on cherche à maintenir ce vecteur d'erreur dans la structure spatiale en élisant un vecteur de commande de l'onduleur apte à corriger l'erreur. Cette élection est faite, selon des variantes, selon différents critères. Cette correction est faite selon une stratégie prédictive ou hystérétique et selon que l'on veut par exemple corriger rapidement l'erreur ou éloigner le plus possible l'apparition de l'erreur suivante.

Plus précisément, l'invention a pour objet un procédé de commande d'un onduleur de tension, l'onduleur étant destiné à piloter une charge en modulation de largeur d'impulsions, et à être relié en amont à une source de tension via un bus continu, et en aval à une charge électrique. Conformément à l'invention, le procédé comporte les étapes suivantes :
- mesure de la tension de source à une entrée de l'onduleur,
- comparaison de la mesure de la tension source à une tension de consigne,
- déduction de cette comparaison d'une erreur instantanée de tension de source,
- élection d'un vecteur de commande de l'onduleur pour maintenir l'erreur instantanée de tension de source dans un intervalle prédéterminé, et
- application du vecteur de commande à l'onduleur.

Selon des modes de réalisation non limitatifs, le procédé selon l'invention peut comporter une ou plusieurs des caractéristiques suivantes :
- l'intervalle prédéterminé est symétrique et centré sur zéro.
- pour la production de la commande de l'onduleur le procédé comporte les étapes suivantes si l'erreur instantanée de tension de source sort de l'intervalle prédéterminé:
   - mise en oeuvre d'une stratégie prédictive basée sur une modélisation prédéterminée de l'impédance du bus continu comportant les étapes suivantes:

   - confrontation de la modélisation de l'impédance du bus continu aux vecteurs de commande possibles,
   - élection du vecteur de commande permettant de ramener l'erreur instantanée de tension de source dans un intervalle prédéterminé.
- le procédé comporte des étapes de commande vectorielle prédictive en courant parmi lesquelles les étapes suivantes:
   - mesure des courants de phase de la charge polyphasée,
   - détermination d'un vecteur de courant dans la charge à partir desdites mesures des courants,
   - calcul d'une erreur vectorielle de courant par rapport à un vecteur de courant de consigne,
   - si l'erreur vectorielle de courant sort d'une structure géométrique prédéterminée alors le procédé comporte les étapes suivantes:
      - confrontation des vecteurs de commande possibles à une modélisation de la charge,
      - élection d'un vecteur de commande ramenant l'erreur vectorielle de courant dans la structure géométrique prédéterminée.
- le procédé comporte des étapes de commande vectorielle en tension parmi lesquelles les étapes suivantes:
   - mesure des tensions de sortie de l'onduleur,
   - détermination d'un vecteur de tension par rapport à un vecteur de consigne,
   - calcul d'un vecteur d'erreur de tension,
   - transformation du vecteur d'erreur de tension,
   - si la transformation du vecteur erreur de tension sort d'une structure géométrique prédéterminée alors le procédé comporte les étapes suivantes:
      - confrontation des vecteurs de commande possibles à l'évolution correspondante de la transformée du vecteur erreur correspondant,
      - élection d'un vecteur de commande ramenant la transformation de l'erreur vectorielle de tension dans la structure géométrique prédéterminée.
- la transformation est une intégrale dans le temps.
- la structure géométrique prédéterminée comporte au moins deux dimensions.
- pour la production de la commande de l'onduleur le procédé comporte les étapes suivantes si l'erreur instantanée de tension de source sort de l'intervalle prédéterminé:
   - mise en oeuvre d'une stratégie hystérétique comportant les étapes suivantes:
   - élection d'un vecteur de commande permettant lors de son application de créer un échelon de courant à l'entrée de l'onduleur corrigeant le sens de variation de la tension de source.
- connaissant l'intervalle prédéterminé, et l'erreur instantanée de tension de source, avec erreur de tension de source = tension mesurée moins tension de consigne, alors
   - si l'erreur de tension de source est supérieure ou égale à la borne supérieure de l'intervalle prédéterminé, alors le procédé élit un vecteur de commande permettant une augmentation du courant,
   - si l'erreur de tension de source est inférieure ou égale à la borne inférieure de l'intervalle prédéterminé, alors le procédé élit un vecteur de commande permettant une diminution du courant.
- le procédé comporte des étapes de commande hystérétique en courant parmi lesquelles les étapes suivantes:
   - calcul pour chaque courant de phase d'une erreur de courant,
   - confrontation de l'erreur de courant à un hystérésis,
   - le résultat de la confrontation à l'hystérésis étant alors la commande de la phase correspondante,
   - le résultat de l'élection visant à maintenir l'erreur instantanée de tension dans l'intervalle prédéterminé primant sur le résultat de la confrontation à l'hystérésis.
- l'étape d'élection comporte une étape de vérification de convergence vérifiant l'évolution de l'erreur, si cette évolution est, avec le vecteur de commande actuel, dans le sens d'une correction de l'erreur alors le vecteur de commande reste inchangé.
- si plusieurs vecteurs de commande sont éligibles, le procédé élit de manière prioritaire celui qui minimise le nombre de commutations dans l'onduleur, puis celui qui maximise le temps d'apparition de la prochaine erreur.

L'invention concerne également un dispositif pour la mise en oeuvre dudit procédé. Selon une caractéristique particulière, le dispositif comporte un onduleur de tension relié en amont à un bus continu, en aval à une charge électrique et connecté à une logique de commande, la logique de commande mettant en oeuvre le procédé de l'invention brièvement décrit ci-dessus et produisant des vecteurs de commande de l'onduleur.

### Brève description des dessins

L'invention sera mieux comprise à la lecture de la description qui suit et à l'examen des figures qui l'accompagnent. Celles-ci sont présentées à titre indicatif et nullement limitatif de l'invention. Les figures montrent :
Fig. 1 : Une illustration de moyens mettant en oeuvre le procédé, selon l'invention.
Fig. 2 : Une régulation de l'erreur de la tension de source dans un intervalle prédéterminé, selon le procédé de l'invention.
Fig. 3 : Une illustration des étapes d'un couplage d'une stratégie prédictive avec des pilotages de l'onduleur existants, selon le procédé de l'invention.
Fig. 4: Une illustration des étapes d'un couplage d'une stratégie hystérétique avec un pilotage de l'onduleur existant, selon le procédé de l'invention.
Fig. 5: Une illustration des étapes d'une élection d'un vecteur de commande, selon le procédé de l'invention.

### Description détaillée de modes de réalisation de l'invention

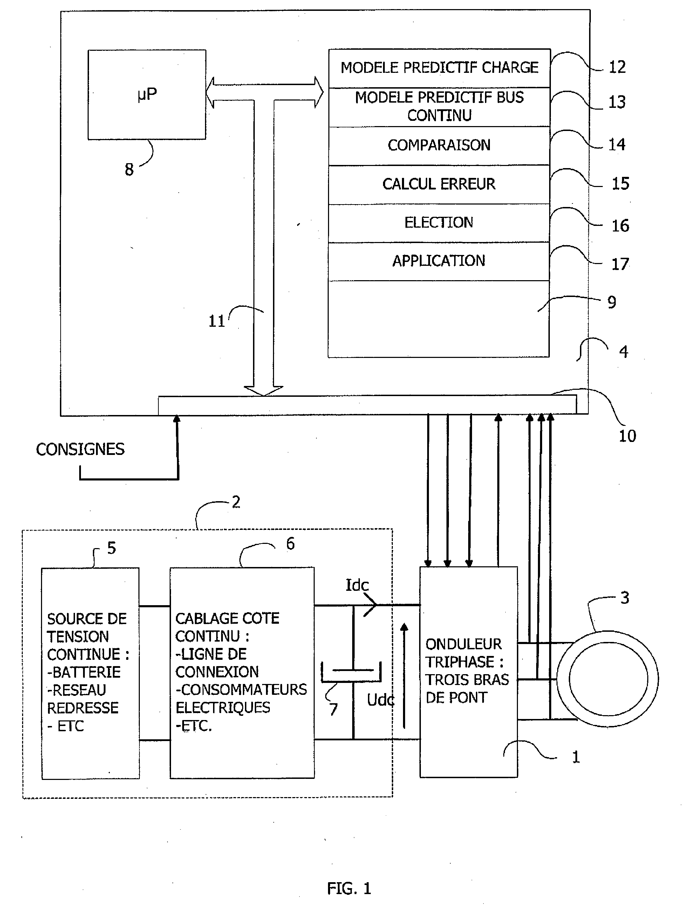

La Fig. 1 montre un onduleur 1 polyphasé relié en amont à un bus continu 2, en aval à une charge 3 polyphasée et commandée par des vecteurs de commandes produits par une logique de commande 4. L'onduleur 1 est un dispositif électrique qui est destiné à convertir une tension continue en plusieurs tensions sinusoïdales, une par phase. L'onduleur 1 comporte plusieurs bras de pont (non représentés). Chaque bras de pont comporte plusieurs interrupteurs commandables électroniquement.

Pour le reste de la description, seul un onduleur triphasé deux niveaux est décrit en sachant qu'il peut être remplacé par d'autres types d'onduleur, existants. L'onduleur 1 est alors un onduleur triphasé pilotant la charge 3. Il comporte donc trois bras de pont. Chaque bras de pont comporte deux interrupteurs bidirectionnels en courant munis de diodes de roue libre.

Le bus continu 2 comporte une source de tension continue 5. Cette source de tension continue 5 est, dans un exemple préféré, une batterie ou un réseau redressé. Cette source de tension 5 alimente la charge 3 via l'onduleur 1. Dans l'exemple de la Fig. 1, des dispositifs 6, qui sont notamment des lignes de connexions et des consommateurs électriques, sont branchés en série et en parallèle respectivement à la source de tension 5. Ces consommateurs électriques peuvent être entre autres, dans le cas d'un véhicule automobile, des phares, une radio, une climatisation, la liste n'est pas exhaustive.

Le bus continu 2 comporte également un condensateur de découplage 7 branché parallèlement à la source de tension 5. Ce condensateur 7 est situé de préférence au plus près de l'onduleur 1. Le condensateur 7 est de faible capacité. La capacité du condensateur 7 est de préférence diminuée de 25% par rapport aux capacités des condensateurs de découplage de l'état de la technique. Dans un mode de réalisation préféré, la capacité du condensateur 7 est de l'ordre de 500 microfarads pour une inductance parasite de la ligne de connexion de l'ordre de 10microHenrys et pour une batterie 36V, 18milliOhms. Le condensateur 7 à pour rôle de filtrer le courant de source entrant dans l'onduleur 1. Le condensateur 7 fournit la partie ondulatoire du courant de source et permet à la source de tension 5 de ne délivrer que la valeur moyenne dudit courant de source à l'onduleur 1.

L'équipement combinant le bus continu 2 et l'onduleur 1 est destiné à fournir l'énergie nécessaire au fonctionnement de la charge 3. L'onduleur 1 est utilisé pour l'entraînement de charge 3. La charge 3 peut être un moteur à induction ou asynchrone. Le point milieu de chaque couple d'interrupteurs d'un même bras de pont de l'onduleur 1 est relié à une phase de la charge 3.

L'onduleur 1 est piloté en modulation de largeur d'impulsions par la logique de commande 4. Pour piloter un onduleur polyphasé la logique de commande 4 définit l'état ouvert ou fermé de l'ensemble des interrupteurs de l'onduleur. La logique de commande 4 permet de commander de manière complémentaire les interrupteurs d'un même bras de pont. L'antagonisme de commande des interrupteurs d'un même bras de pont et le nombre fini d'interrupteurs fait que le nombre de configurations possibles des interrupteurs des bras de pont est fini.

Pour l'onduleur triphasé deux niveaux, on peut générer huit configurations différentes des interrupteurs des bras de pont. A chacune de ces huit configurations, on peut associer une représentation vectorielle des tensions de sortie de l'onduleur que l'on nommera des vecteurs de commandes de l'onduleur. Ces vecteurs de commandes sont communément appelés vecteur de sortie de l'onduleur.

Le vecteur de commande est une représentation mathématique qui traduit la résultante des tensions réelles appliquées sur la charge 3. Parmi ces configurations, six sont des états actifs V1 à V6 correspondant à une amplitude du vecteur de commande fixe et se distinguent par la phase et deux V0 et V7 sont des états dits de "roue libre" pour lesquels l'amplitude du vecteur de commande est nulle et sa phase (ϕ=arc tangente y/x) n'est pas définie. Le vecteur de commande produit par la logique de commande 4 comporte au moins autant de commande que la charge 3 comporte de phases. Dans le cas de l'exemple pris d'un onduleur triphasé deux niveaux, commandé en complémentaire, on a trois commandes.

Les vecteurs de commandes produits par la logique de commande 4 peuvent être représentés dans un repère statorique. Le repère statorique est un repère d'axe (α, β) fixes liés au stator. L'axe α est horizontal et l'axe β est vertical.

La logique de commande 4 est, souvent réalisée sous forme de circuit intégré. Dans un exemple, cette logique de commande 4 comporte un microprocesseur 8, une mémoire 9 de programme et une interface 10 d'entrée sortie. Le microprocesseur 8, la mémoire 9 et l'interface 10 d'entrée sortie sont interconnectés par un bus 11.

Dans la pratique, lorsque l'on prête une action à un dispositif, celle-ci est réalisée par un microprocesseur du dispositif commandé par des codes instructions enregistrés dans une mémoire de programme du dispositif. La logique de commande 4 est un tel dispositif.

La mémoire 9 de programme est divisée en plusieurs zones, chaque zone correspondant à des codes instructions pour réaliser une fonction du dispositif. La mémoire 9 comporte, selon les variantes de l'invention, une zone 13 comportant des codes instructions pour la mise en oeuvre d'un modèle prédictif du bus continu 2. La mémoire 9 comporte une zone 12 comportant des codes instructions pour mettre en oeuvre un modèle prédictif de la charge 3. La mémoire 9 comporte une zone 14 comportant des codes instructions pour déterminer une différence entre la tension de source et une consigne de tension. La mémoire 9 comporte une zone 15 comportant des codes instructions pour déterminer une erreur. La mémoire 9 comporte une zone 16 comportant des codes instructions pour élire un vecteur de commande de l'onduleur. La mémoire 9 comporte une zone 17 comportant des codes instructions pour appliquer à l'onduleur le vecteur de commande élu.

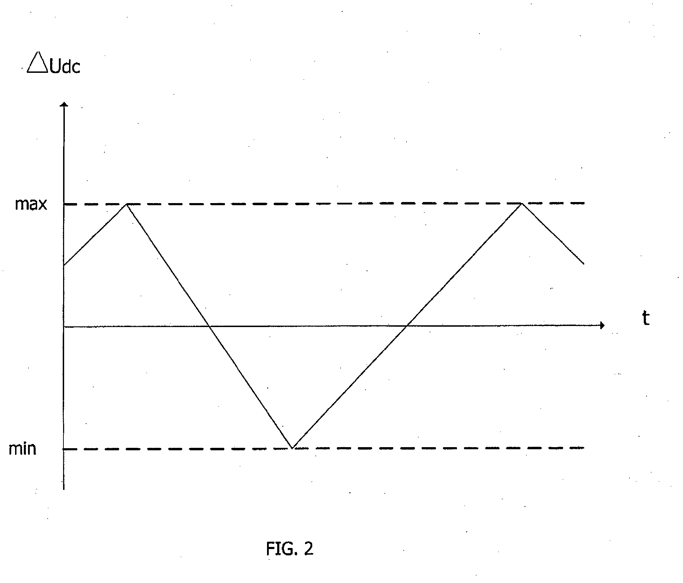

La Fig. 2 montre la régulation de la tension de source. Dans l'exemple de la Fig. 2, la logique de commande 4 produit un intervalle prédéterminé [min, max]. Dans un exemple préféré, l'intervalle prédéterminé est symétrique et centré sur zéro, par exemple [-1V, +1V]. On notera que cet intervalle peut être également ouvert.

La logique de commande 4 reçoit sur l'interface 10 une tension de consigne de source U*_{DC}. Cette tension de consigne de source U*_{DC} est de préférence une valeur filtrée d'une mesure de la tension de source. Elle peut être également une estimation de la tension de source, par exemple en utilisant un reconstructeur d'état de type Kalman ou Luenberger. Cette valeur filtrée ou cette estimation permet de limiter les ondulations de la tension autour d'une moyenne de la tension de source.

La logique de commande 4 acquiert la mesure de la tension de source U_{DC}. La logique de commande 4 peut acquérir cette mesure de la tension de source U_{DC}, qui est également la tension du bus continu, par une mesure de ladite tension près de l'onduleur 1. Elle peut acquérir également la mesure de la tension de source U_{DC} par des estimations ou par des mesures indirectes.

La logique de commande 4 calcule l'erreur instantanée de tension de source ΔU_{DC}. Dans un exemple, ΔU_{DC} est la différence entre la tension de source U_{DC} et la tension de consigne U*_{DC}. L'erreur instantanée de tension de source ΔU_{DC} est maintenue par la logique de commande 4 dans l'intervalle prédéterminé [min, max] sinon on pourrait perdre le contrôle de la charge. Pour ce faire, la logique de commande élit un vecteur de commande pour lequel la tension de source U_{DC} est la plus proche possible de la valeur de tension de consigne U*_{DC}. Elle applique ce vecteur de commande élu à l'onduleur.

La régulation de la tension de source U_{DC} peut être réalisée, dans un exemple, par deux méthodes. Dans une première méthode, la tension de source U_{DC} est régulée selon une stratégie prédictive. Et dans une seconde méthode, la tension de source U_{DC} est régulée selon une stratégie hystérétique.

Ces deux méthodes peuvent être couplées avec tous les types de pilotages de l'onduleur existants. De ce fait, on contrôle la partie amont avec la stratégie prédictive ou hystérétique et on contrôle la partie aval avec les pilotages de l'onduleur existants.

### Stratégie prédictive

Dans la première méthode de la régulation de la tension de source U_{DC}, la logique de commande 4 met en oeuvre une stratégie prédictive. La stratégie prédictive est basée sur une modélisation prédéterminée de l'impédance du bus continu. Cette modélisation prédéterminée de l'impédance du bus continu représente le modèle prédictif du bus continu.

Dans le cas où, l'erreur instantanée de tension de source ΔU_{DC} sort de l'intervalle prédéterminé [min, max], la logique de commande 4 confronte la modélisation du bus continu aux vecteurs de commandes possibles. De cette confrontation, elle élit le vecteur de commande permettant de ramener l'erreur dans l'intervalle prédéterminé. La modélisation du bus continu permet donc de simuler la réponse du bus continu à un vecteur de commande donné. Cette simulation permet de tester les différents vecteurs de commandes possibles pour élire celui correspondant le plus à un critère prédéterminé.

La régulation de la tension de source par la stratégie prédictive est destinée à prévoir l'évolution de la tension U_{DC} au moment où on doit effectuer une commutation des interrupteurs des bras de pont de l'onduleur de façon à choisir la meilleure commutation possible.

Cette stratégie en tension de source permet de maîtriser l'ondulation de la tension de source quand la capacité de découplage est de faible valeur. En effet, on notera qu'avec des capacités de faibles valeurs, dès la moindre inductance parasite, il apparaît un circuit résonant en amont de l'onduleur, conduisant à des ondulations de la tension de la source d'alimentation. Ces ondulations peuvent provoquer la destruction irréversible des interrupteurs de l'onduleur par dépassement de la tension inverse admissible à leurs bornes. Cela perturbe l'alimentation de consommateurs électriques éventuels, notamment les phares dans le cas d'un véhicule automobile, branchés en parallèle sur la source de tension.

### Stratégie hystérétique

Dans la seconde méthode de la régulation de la tension de source, la logique de commande 4 met en oeuvre une stratégie hystérétique. Dans le cas où l'erreur instantanée de tension de source ΔU_{DC} sort de l'intervalle prédéterminé, la logique de commande 4 élit un vecteur de commande permettant, lors de son application à l'onduleur 1, de créer un échelon de courant à l'entrée de l'onduleur 1 corrigeant le sens de variation de la tension de source U_{DC}. Si l'erreur instantanée de tension de source ΔU_{DC} est plus grande que le max de l'intervalle prédéterminé alors la logique de commande 4 impose un échelon de courant de source positif provoquant une rupture de pente suffisante pour que la tension de source change de sens d'évolution. De même, si l'erreur instantanée de tension de source ΔU_{DC} est plus petite que le min de l'intervalle prédéterminé alors la logique de commande 4 impose un échelon de courant de source négatif

La stratégie hystérétique permet de s'affranchir de la connaissance du modèle prédictif du bus continu, ce modèle étant difficile à obtenir car il faut mesurer des éléments parasites, i.e. de très faibles valeurs.

Cette stratégie est robuste vis-à-vis de la variation des paramètres du bus continu, i.e. elle ne dépend pas de manière conséquente de la variation desdits paramètres.

Par ailleurs, l'algorithme de cette stratégie est simple et d'exécution rapide.

Enfin, cette stratégie peut être effectuée de manière analogique ou numérique.

### Couplage stratégie prédictive et pilotage prédictif en courant ou en tension

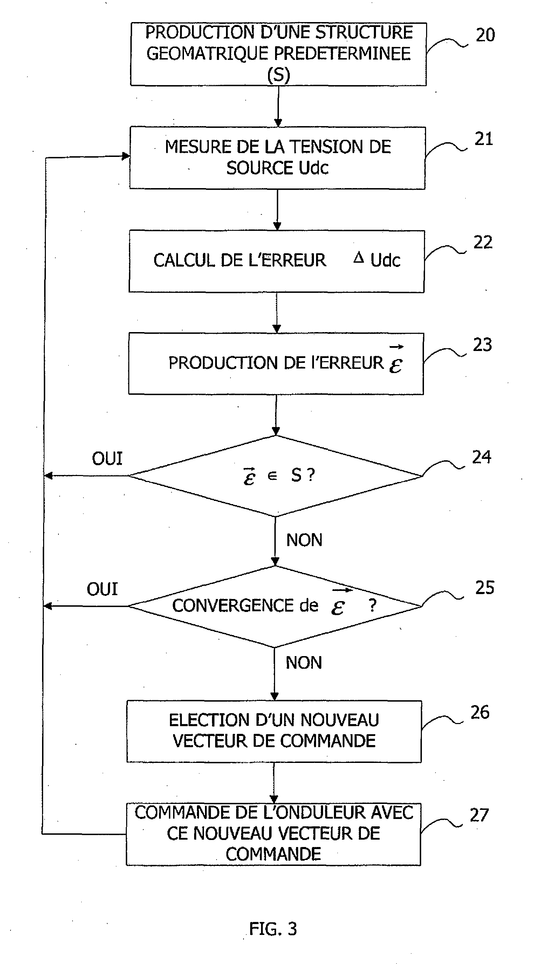

La Fig. 3 montre un mode de réalisation de l'invention dans lequel la stratégie prédictive est couplée à un pilotage prédictif en courant de la charge 3 ou à un pilotage vectoriel en tension de la charge 3 de manière à avoir à la fois un contrôle en amont et en aval de l'onduleur 1. Dans l'exemple de la Fig. 3, la logique de commande 4 produit à l'étape 20 une structure géométrique prédéterminée. Pour déterminer cette structure géométrique prédéterminée, la logique de commande 4 produit à l'étape 20 une première partie de la structure géométrique (nécessaire au contrôle aval) et une seconde partie de cette structure géométrique qui est l'intervalle prédéterminé [min, max] (nécessaire au contrôle amont). La production de la première partie de la structure géométrique dépend du pilotage de la charge 3.

Dans le cas du pilotage prédictif en courant de la charge 3, l'onduleur 1 pilote la charge 3 en courant. La logique de commande 4 acquiert les mesures des courants de chaque phase de la charge 3. La logique de commande 4 peut acquérir ces mesures soit en réalisant des mesures dans les phases de la charge 3 soit en réalisant des estimations ou des mesures indirectes.

L'ensemble des courants de phase peut être représenté par un vecteur courant dans *̅I̅*̅ le repère statorique. La logique de commande 4 reçoit à l'interface 10 un vecteur courant consigne*̅I̅*̅*. La logique de commande 4 calcule l'erreur vectorielle de courant. Dans un exemple, l'erreur vectorielle de courant (Δlx, Δly) est la différence entre le vecteur courant*̅I̅*̅ et le vecteur courant consigne*̅I̅*̅*. Pour que le contrôle en courant de la charge soit optimal, il faut que l'erreur vectorielle de courant soit le plus faible possible. L'erreur vectorielle de courant est alors circonscrit dans un domaine du plan, par la logique de commande 4. Ce domaine du plan est la première partie de la structure géométrique prédéterminée produit par la logique de commande 4 à l'étape 20. Dans un mode de réalisation préféré, ce domaine du plan est un disque. Cela permet de détecter facilement les sorties du domaine du plan.

La connaissance de la charge 3 électrique polyphasée et des mesures sur celle-ci permet à la logique de commande 4 d'établir un modèle prédictif d'évolution de l'erreur vectorielle de courant en fonction des vecteurs de commande de l'onduleur.

Lorsque l'erreur vectorielle de courant sort du disque, alors la logique de commande 4 confronte des vecteurs de commande possibles à une modélisation de la charge 3. A partir de cette confrontation, la logique de commande 4 élit le vecteur de commande ramenant l'erreur vectorielle de courant dans le disque.

Dans le cas du pilotage vectoriel en tension de la charge 3, l'onduleur 1 pilote la charge 3 en tension. La logique de commande 4 acquiert les mesures des tensions de chaque phase de la charge 3. La logique de commande 4 peut acquérir ces mesures soit en réalisant des mesures dans les phases de la charge 3 soit en réalisant des estimations ou des mesures indirectes. L'ensemble des tensions de phase peut être représenté par un vecteur tension dans le repère statorique.

La logique de commande 4 reçoit à l'interface 10 un vecteur tension de consigne *̅V̅*̅*. La logique de commande 4 calcule l'erreur vectorielle de tension. Dans un exemple, l'erreur vectorielle de tension est la différence entre le vecteur tension de consigne*̅V̅*̅* et le vecteur tension*̅V̅*̅. Pour que le contrôle en tension de la charge soit optimal de manière à la piloter efficacement, il faut que la valeur moyenne de la norme de l'erreur vectorielle de tension soit la plus faible possible.

Les valeurs prises par le vecteur tension étant discrètes, l'erreur vectorielle de tension ne peut être annulée de manière instantanée. La logique de commande 4 réalise alors une transformation de l'erreur vectorielle de tension qui pourra, quant à elle, être annulée.

Dans un mode de réalisation préféré, la logique de commande peut annuler en valeur moyenne l'erreur vectorielle de tension. Dans un exemple, l'annulation de la valeur moyenne de l'erreur vectorielle de tension est obtenue par une intégrale dans le temps de ladite erreur vectorielle de tension. Autrement dit, la transformation de l'erreur vectorielle de tension est une intégrale dans le temps de l'erreur vectorielle de tension.

Pour que le contrôle vectoriel en tension de la charge 3 soit de bonne qualité, i.e. optimal, il faut que l'intégrale dans le temps de l'erreur vectorielle de tension soit le plus faible possible. La logique de commande 4 circonscrit alors le vecteur intégral de l'erreur vectorielle de tension dans un domaine du plan, i.e. le maintient à l'intérieur de ce domaine du plan. Ce domaine du plan est la première partie de la structure géométrique prédéterminée produit par la logique de commande 4 à l'étape 20. Dans un mode de réalisation préféré, ce domaine du plan est un disque.

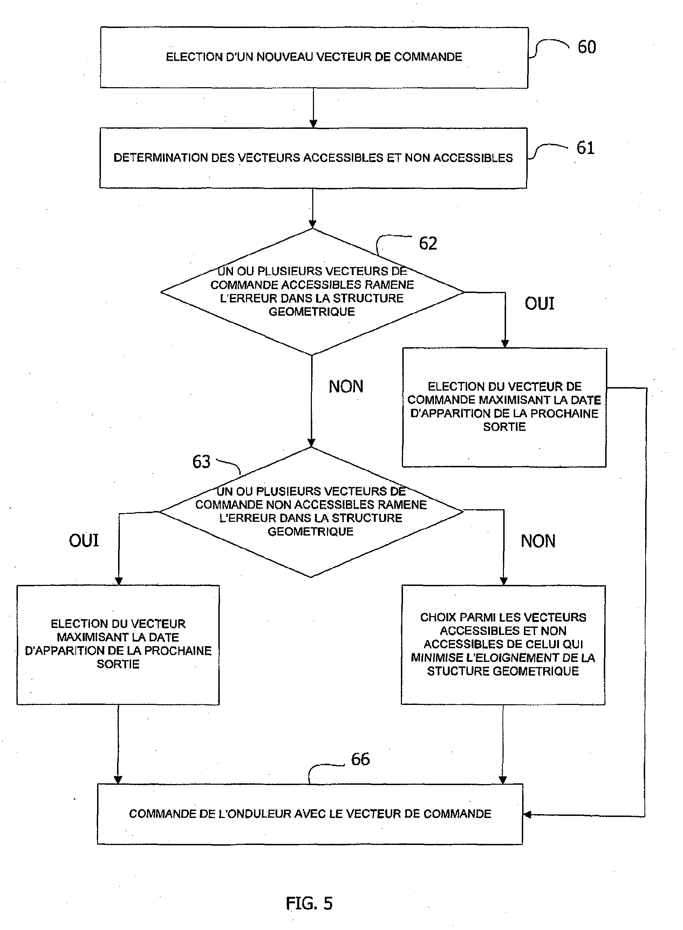

Lorsque l'intégrale de l'erreur vectorielle de tension sort du disque alors la logique de commande 4 confronte les vecteurs de commande possibles à l'évolution correspondante de la transformée du vecteur erreur correspondant. La logique de commande 4 élit un vecteur de commande ramenant l'intégrale de l'erreur vectorielle de tension dans le disque. Le vecteur est élu selon un exemple de réalisation illustré à la Fig. 5, exemple qui sera détaillé plus loin dans la description.

De manière générale, la structure géométrique prédéterminée comporte au moins deux dimensions quelque soit le nombre de phases de la charge 3. Dans l'exemple pris, on a trois phases, et la structure géométrique a deux dimensions car c'est un disque.

Après la détermination de la structure géométrique prédéterminée par la logique de commande 4 à l'étape 20, la logique de commande 4 mesure ou estime la tension de source U_{DC} à l'étape 21. A l'étape 22, la logique de commande 4 calcule l'erreur instantanée de tension de source ΔU_{DC} en fonction de la tension de consigne U*_{DC}. Cette erreur instantanée de tension de source Δ U_{DC} est la différence entre la tension de source U_{DC} et la tension de consigne U*_{DC}.

La logique de commande 4 doit maintenir d'une part l'erreur vectorielle en courant dans un disque, dans le cas d'un pilotage en courant, ou l'intégrale de l'erreur vectorielle de tension dans un disque, dans le cas d'un pilotage en tension, et d'autre part l'erreur instantanée de tension de source ΔU_{DC} dans l'intervalle prédéterminé par une stratégie prédictive.

Pour cela, la logique de commande 4 définit, à l'étape 23, un vecteur erreur*̅ε̅*̅ représentant la concaténation de l'erreur vectorielle en courant (ΔIx, Δly) (contrôle aval) ou de l'intégrale de l'erreur vectorielle de tension et de l'erreur de tension de source ΔU_{DC} (contrôle amont). Le but de la stratégie est donc de définir l'état des interrupteurs de l'onduleur polyphasé pour que le vecteur erreur*̅ε̅*̅ ((Δlx, Δly, ΔU_{DC}) reste en permanence dans la structure géométrique prédéterminée. Cette structure géométrique prédéterminée est un volume. Ce volume représente la première partie de la structure géométrique prédéterminée et l'intervalle prédéterminé. Dans le cas où, la première partie de la structure géométrique prédéterminée est un disque alors le domaine de l'espace du vecteur erreur*̅ε̅*̅ est un cylindre.

De manière générale, la première partie de la structure géométrique prédéterminée comporte au moins deux dimensions quelque soit le nombre de phases de la charge 3. Dans l'exemple pris, on a trois phases, et la première partie de la structure géométrique a deux dimensions car c'est un disque. Par ailleurs, le couplage des dimensions de la première partie de la structure géométrique avec la dimension de l'erreur instantanée de tension de source étend cette structure à une dimension supplémentaire. Dans l'exemple de la Fig. 3, la structure géométrique prédéterminée produite à l'étape 20 est donc un cylindre, soit une structure à 3 dimensions.

Avec les deux modèles prédictifs, prédictif en courant ou prédictif en tension, la logique de commande 4 est capable à tout instant d'estimer la trajectoire du vecteur erreur*̅ε̅*̅ dans l'espace. La logique de commande 4 peut déterminer donc de manière optimale le vecteur de commande de l'onduleur permettant de maintenir l'erreur dans le cylindre.

A l'étape 24, la logique de commande 4 scrute en permanence le vecteur erreur*̅ε̅*̅ pour voir s'il est dans le cylindre. S'il est en dehors du cylindre, alors la logique de commande 4 détermine, à l'étape 25, si le vecteur erreur*̅ε̅*̅ converge vers le cylindre. Dans le cas où, le vecteur erreur*̅ε̅*̅ converge vers le cylindre alors la logique de commande 4 maintient le même vecteur de commande de l'onduleur 1. Lorsque le vecteur erreur*̅ε̅*̅ ne converge pas vers le cylindre, alors la logique de commande 4 élit, à l'étape 26, un nouveau vecteur de commande ramenant le vecteur erreur*̅ε̅*̅ dans le cylindre. Les critères d'élection du nouveau vecteur de commande, à l'étape 26, sont décrits à la Fig. 5. A l'étape 27 la logique de commande 4 commande l'onduleur 1 avec ce nouveau vecteur de commande.

Ainsi, un tel couplage permet de minimiser la fréquence moyenne de commutation des interrupteurs pour un volume donné de la structure géométrique de sorte qu'il y ait moins de pertes par commutation, et donc de diminuer le stress des composants de puissance.

La Fig. 5 montre les différentes étapes d'une élection d'un vecteur de commande pour les stratégies prédictives. Une étape 60 préliminaire dans laquelle la logique de commande 4 élit un nouveau vecteur de commande. Pour cela, la logique de commande 4 détermine à l'étape 61 les vecteurs de commande accessibles et les vecteurs de commande non accessibles des bras de pont de l'onduleur 1. Les vecteurs de commandes accessibles sont les vecteurs de commandes ne nécessitant qu'une seule commutation sur un seul bras de pont par rapport à l'état actuel de l'onduleur 1. Les vecteurs de commande non accessibles sont les vecteurs de commandes restant.

A l'étape 62, la logique de commande 4 détermine dans les vecteurs de commande accessibles ceux ramenant l'erreur dans sa structure géométrique. Puis, elle détermine parmi ces vecteurs de commande celui maximisant le temps d'apparition de la prochaine erreur.

La logique de commande 4 commande l'onduleur ce vecteur de commande accessible.

Lorsque aucun des vecteurs de commande accessibles ne ramène l'erreur dans sa structure géométrique, alors la logique de commande 4 vérifie à l'étape 63 si un des vecteurs de commande non accessibles ramène l'erreur dans sa structure géométrique. Puis, elle détermine parmi ces vecteurs de commande celui maximisant le temps d'apparition de la prochaine erreur pour réduire les pertes par commutation dans l'onduleur.

On peut également prévoir le vecteur de commande qui rapproche le plus du centre de la structure géométrique afin de privilégier la finesse du contrôle prédictif.

La logique de commande 4 commande l'onduleur avec ce vecteur de commande non accessible.

Lorsque aucun des vecteurs de commande accessibles et non accessibles ne ramène l'erreur dans sa structure géométrique, alors la logique de commande 4 peut élire le vecteur de commande de la manière suivante :
- le vecteur de commande qui minimise l'éloignement de la structure géométrique.

Bien entendu on pourra de nouveau si on le désire faire la différence entre les vecteurs accessibles et non accessibles dans ce cas là.

### Couplage stratégie hystérétique et pilotage hystérétique en courant

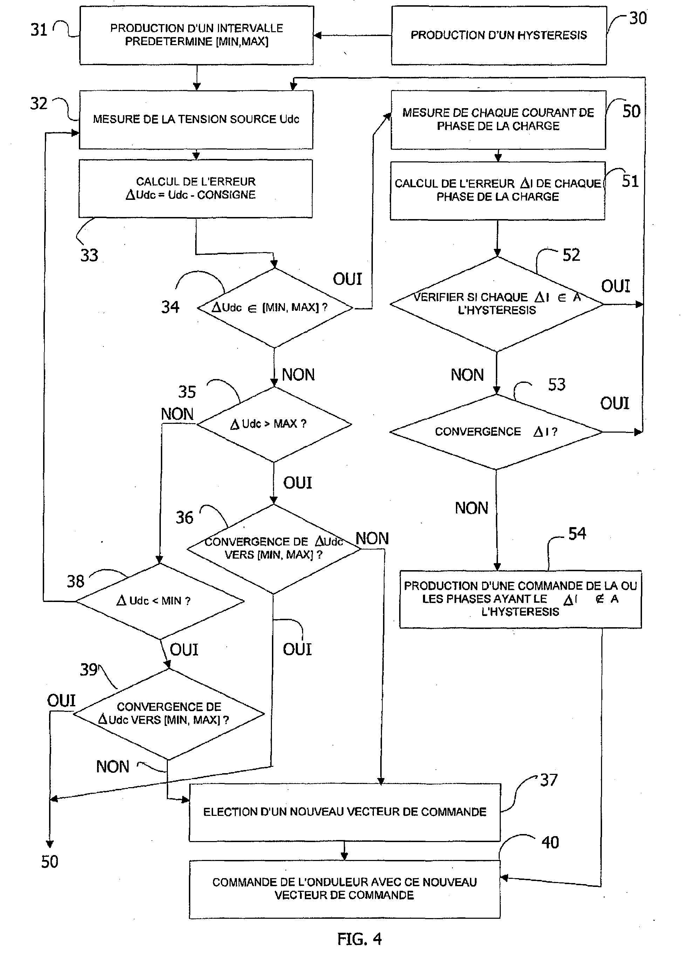

La Fig. 4 montre un autre mode de réalisation dans lequel la stratégie hystérétique est couplée à un pilotage en courant de la charge 3 de manière à avoir à la fois un contrôle en amont et en aval de l'onduleur 1. Dans le cas du pilotage en courant de la charge 3, l'onduleur 1 pilote la charge 3 électrique polyphasée en courant. Dans l'exemple de la Fig. 3, la logique de commande 4 produit à l'étape 30 un hystérésis.

L'hystérésis permet de comparer une erreur scalaire de courant de chaque phase de la charge 3 à deux seuils d'erreur de courant prédéfinis et différents. Produire un hystérésis revient donc à produire un intervalle [δH1, δ H2]. L'hystérésis définit le un seuil d'erreur δH1 de courant pour lequel il produit à sa sortie une commande de la phase (ici à +U_{DC}). Il définit également le un seuil d'erreur δH2 de courant pour lequel il arrête la production de la commande de la phase (ici à 0).

A l'étape 31, la logique de commande 4 produit l'intervalle prédéterminé [min, max]. Elle mesure ou estime la tension de source U_{DC}, à l'étape 32. A l'étape 33, la logique de commande 4 calcule l'erreur instantanée de tension de source ΔU_{DC} en fonction de la tension de consigne U*_{DC}. A l'étape 34, la logique de commande 4 scrute en permanence l'erreur instantanée de tension de source ΔU_{DC} pour vérifier s'il est dans l'intervalle prédéterminé. Si l'erreur instantanée de tension de source ΔU_{DC} est dans l'intervalle prédéterminé, la logique de commande 4 applique l'étape 50. Si l'erreur instantanée de tension de source ΔU_{DC} est en dehors de l'intervalle prédéterminé, la logique de commande 4 applique l'étape 35.

L'étape 50 correspond au contrôle de la charge 3, en aval de l'onduleur 1. L'étape 35 correspond au contrôle de la tension de source, en amont de l'onduleur. Dans l'exemple de la Fig. 4, le contrôle de la partie amont de l'onduleur est prioritaire sur le contrôle de la partie aval de l'onduleur. Autrement dit, le résultat de l'élection visant à maintenir l'erreur instantanée de tension de source ΔU_{DC} dans l'intervalle prédéterminé prime sur la sortie de l'hystérésis. En effet, si on perd le contrôle en amont, on perd le contrôle en aval, i.e. si on ne dispose pas de la tension nécessaire en amont, on ne pourra pas appliquer les courants nécessaires en aval.

A l'étape 35, la logique de commande 4 vérifie si l'erreur instantanée de tension de source ΔU_{DC} est supérieure ou égale au max de l'intervalle prédéterminé. Si c'est le cas, alors la logique de commande 4 détermine à l'étape 36 la convergence de l'erreur instantanée de tension de source Δ U_{DC} vers l'intervalle prédéterminé. Si l'erreur instantanée de tension de source ΔU_{DC} converge vers l'intervalle prédéterminé alors la logique de commande 4 maintient le même vecteur de commande.

Lorsque l'erreur instantanée de tension de source ΔU_{DC} ne converge pas vers l'intervalle prédéterminé, alors la logique de commande 4 élit, à l'étape 37, un nouveau vecteur de commande, comme décrit précédemment, ramenant l'erreur instantanée de tension de source ΔU_{DC} dans l'intervalle prédéterminé.

Lorsque l'erreur instantanée de tension de source ΔU_{DC} est inférieure à max, à l'étape 35, alors la logique de commande 4 vérifie, à l'étape 38, si l'erreur instantanée de tension de source ΔU_{DC} est inférieure ou égale à min de l'intervalle prédéterminé. Si c'est le cas, alors la logique de commande 4 détermine, à l'étape 39, la convergence de l'erreur instantanée de tension de source ΔU_{DC} vers l'intervalle prédéterminé. Si l'erreur instantanée de tension de source ΔU_{DC} converge vers l'intervalle prédéterminé alors la logique de commande 4 maintient le même vecteur de commande.

Lorsque l'erreur instantanée de tension de source ΔU_{DC} ne converge pas vers l'intervalle prédéterminé, alors la logique de commande 4 élit, à l'étape 37, un nouveau vecteur de commande ramenant l'erreur instantanée de tension de source ΔU_{DC} dans l'intervalle prédéterminé.

A l'étape 50, la logique de commande 4 mesure ou estime les courants de chaque phase de la charge 3. La logique de commande 4 reçoit à l'interface 10 un courant consigne. La logique de commande 4 calcule l'erreur de courant de chaque phase de la charge 3, à l'étape 51. Dans un exemple l'erreur de courant est égale à la différence entre le courant de phase et le courant consigne.

A l'étape 52, la logique de commande 4 confronte chaque erreur de courant de chaque phase de la charge 3 à l'hystérésis. L'hystérésis produit à sa sortie une commande de la phase pour chacun des phases de la charge 3. Ces commandes de la phase déterminent l'état de chaque bras de pont de l'onduleur correspondant.

Autrement dit, le contrôle en courant de la charge définit l'état d'un bras de pont de l'onduleur polyphasé en fonction de l'erreur de courant de phase dans celui-ci. En fonction de cette erreur dans le bras correspondant, on choisit de changer le vecteur de commande selon le principe de l'hystérésis.

Le nombre d'état de sortie de l'hystérésis est égal au nombre de niveaux de sortie de l'onduleur polyphasé que l'on commande.

Lorsque l'erreur de courant d'un bras de pont est en dehors de l'hystérésis, la logique de commande 4 détermine, à l'étape 53, la convergence de l'erreur de courant par rapport à l'hystérésis. Lorsque l'erreur de courant dudit bras de pont converge vers l'hystérésis, la logique de commande 4 maintient la commande pilotant ce bras de pont. Ceci est valable pour tous les bras de pont de l'onduleur.

Lorsque l'erreur de courant d'un bras de pont ne converge pas vers l'hystérésis, la logique de commande 4 produit une nouvelle commande de la phase, à l'étape 54, pour ce bras de pont. Ceci est valable pour tous les bras de pont de l'onduleur, on a donc bien un hystérésis par bras et donc par phase de la charge 3.

A l'étape 40, la logique de commande 4 commande l'onduleur 1 avec ce nouveau vecteur de commande

### Variante de réalisation

On peut piloter la charge 3 par une variante de la stratégie hystérétique couplée au pilotage en courant de la charge. Cette variante est utilisée quand la charge est à neutre isolé, i.e. que le point neutre des phases de la charge n'est pas connecté à un potentiel. En fait, lorsque la charge est à neutre isolé on constate que un des l'hystérésis pour le contrôle des phases correspondantes est redondant. En effet dans ce cas, la somme des courants de phase est toujours égale à 0. Ainsi, à tout moment, un des bras de pont n'est plus réellement commandable en courant.

Pour piloter en courant la charge, la logique de commande 4 modifie le mode de fonctionnement de l'hystérésis. La logique de commande 4 effectue le contrôle en courant, par une comparaison des erreurs de chaque phase de la charge à l'hystérésis, sur N-1 bras de pont. Elle effectue un contrôle en tension sur le bras de pont restant. N étant le nombre de phases de la charge 3. Il y a autant de phase qu'il y a de bras de pont.

Dans un mode de réalisation préféré, la logique de commande 4 contrôle en tension le bras de pont ayant le courant de phase le plus important en effectuant un blocage de ce dernier. On entend par blocage d'un bras de pont le maintient dudit bras de pont dans un état donné. Autrement dit, les états des interrupteurs dudit bras de pont ne changent pas.

La logique de commande 4 permet de commuter de manière alternative l'ensemble des bras de pont de l'onduleur. Le gain est de ne plus commuter les bras de pont lorsque le courant dans ces derniers est maximum et donc de diminuer les pertes par commutation dans les interrupteurs.

En fonction du déphasage entre le vecteur courant *̅I̅*̅ et le vecteur tension de consigne *̅V̅*̅*, il est parfois impossible de bloquer le bras de pont ayant le courant de phase le plus important. Dans ce cas, la logique de commande 4 bloque le deuxième bras de pont ayant le courant de phase le plus important. Si ce dernier n'est pas blocable, alors la logique de commande 4 bloque le troisième bras de pont ayant le courant de phase le plus important, et ainsi de suite.

Ainsi, un avantage du couplage avec une charge de neutre isolé est de réduire de manière optimale les pertes par commutation.

Ainsi, les avantages du couplage hystérétique avec un pilotage hystérétique de la charge 3 à neutre isolé ou non sont :
- un algorithme simple et rapide à exécuter donc facilement intégrable dans un processeur de signal embarqué,
- robustesse vis-à-vis des variations des paramètres de la charge.

## Revendications

1. Procédé de commande d'un onduleur de tension, l'onduleur étant destiné à piloter une charge en modulation de largeur d'impulsions, et à être relié en amont à une source de tension via un bus continu, et en aval à une charge électrique, avec les étapes suivantes:
- mesure de la tension de source à une entrée de l'onduleur,
- comparaison de la mesure de la tension source à une tension de consigne; **caracterisé en ce que** le procédé comporte aussi les étapes suivantes:
- déduction de cette comparaison d'une erreur instantanée de tension de source,
- élection d'un vecteur de commande de l'onduleur pour maintenir l'erreur instantanée de tension de source dans un intervalle prédéterminé ([min, max]), et
- application du vecteur de commande à l'onduleur.

2. Procédé selon la revendication 1, **caractérisé en ce que** l'intervalle prédéterminé est symétrique et centré sur zéro.

3. Procédé selon l'une des revendications 1 à 2, **caractérisé en ce que** pour la production de la commande de l'onduleur le procédé comporte les étapes suivantes si l'erreur instantanée de tension de source sort de l'intervalle prédéterminé:
- mise en oeuvre d'une stratégie prédictive basé sur une modélisation prédéterminée de l'impédance du bus continu comportant les étapes suivantes:
- confrontation de la modélisation de l'impédance du bus continu aux vecteurs de commande possibles,
- élection du vecteur de commande permettant de ramener l'erreur instantanée de tension de source dans un intervalle prédéterminé.

4. Procédé selon l'une des revendications 1 à 3, **caractérisé en ce qu'**il comporte des étapes de commande vectorielle prédictive en courant parmi lesquelles les étapes suivantes:
- mesure des courants de phase de la charge polyphasée,
- détermination d'un vecteur de courant dans la charge à partir desdites mesures des courants,
- calcul d'une erreur vectorielle de courant par rapport à un vecteur de courant de consigne,
- si l'erreur vectorielle de courant sort d'une structure géométrique prédéterminée alors le procédé comporte les étapes suivantes:
- confrontation des vecteurs de commande possibles à une modélisation de la charge,
- élection d'un vecteur de commande ramenant l'erreur vectorielle de courant dans la structure géométrique prédéterminée.

5. Procédé selon l'une des revendications 1 à 3, **caractérisé en ce qu'**il comporte des étapes de commande vectorielle en tension parmi lesquelles les étapes suivantes:
- mesure des tensions de sortie de l'onduleur,
- détermination d'un vecteur de tension par rapport à un vecteur de consigne,
- calcul d'un vecteur d'erreur de tension,
- transformation du vecteur d'erreur de tension,
si la transformation du vecteur erreur de tension sort d'une structure géométrique prédéterminée alors le procédé comporte les étapes suivantes:
- confrontation des vecteurs de commande possibles à l'évolution correspondante de la transformée du vecteur erreur correspondant,
- élection d'un vecteur de commande ramenant la transformation de l'erreur vectorielle de tension dans la structure géométrique prédéterminée.

6. Procédé selon la revendication 5, **caractérisé en ce que** la transformation est une intégrale dans le temps.

7. Procédé selon les revendications 3 à 6, **caractérisé en ce que** la structure géométrique prédéterminée comporte au moins deux dimensions.

8. Procédé selon l'une des revendications 1 à 2, **caractérisé en ce que** pour la production de la commande de l'onduleur le procédé comporte les étapes suivantes si l'erreur instantanée de tension de source sort de l'intervalle prédéterminé:
- mise en oeuvre d'une stratégie hystérétique comportant les étapes suivantes:
- élection d'un vecteur de commande permettant lors de son application de créer un échelon de courant à l'entrée de l'onduleur corrigeant le sens de variation de la tension de source.

9. Procédé selon la revendication 8, **caractérisé en ce que** connaissant l'intervalle prédéterminé ([min, max]), et l'erreur instantanée de tension de source (ΔU_{DC}), avec erreur de tension de source (ΔU_{DC})= tension mesurée (U_{DC}) moins tension de consigne (U*_{DC}), alors
- si l'erreur de tension de source (ΔU_{DC} ) est supérieure ou égale la borne supérieure (max) de l'intervalle prédéterminé ([min, max]), alors le procédé élit un vecteur de commande permettant une augmentation du courant,
- si l'erreur de tension de source (ΔU_{DC} ) est inférieure ou égale à la borne inférieure (min) de l'intervalle prédéterminé ([min, max]), alors le procédé élit un vecteur de commande permettant une diminution du courant.

10. Procédé selon l'une des revendications 1, 2, 8 ou 9, **caractérisé en ce qu'**il comporte des étapes de commande hystérétique en courant parmi lesquelles les étapes suivantes:
- calcul pour chaque courant de phase d'une erreur de courant,
- confrontation de l'erreur de courant à un hystérésis,
- le résultat de la confrontation à l'hystérésis étant alors la commande de la phase correspondante,
- le résultat de l'élection visant à maintenir l'erreur instantanée de tension dans l'intervalle prédéterminé primant sur le résultat de la confrontation à l'hystérésis.

11. Procédé selon l'une des revendications 1 à 10, **caractérisé en ce que** l'étape d'élection comporte une étape de vérification de convergence vérifiant l'évolution de l'erreur, si cette évolution est, avec le vecteur de commande actuel, dans le sens d'une correction de l'erreur alors le vecteur de commande reste inchangé.

12. Procédé selon l'une des revendications 1 à 7, **caractérisé en ce que** si plusieurs vecteurs de commande sont éligibles, le procédé élit de manière prioritaire celui qui minimise le nombre de commutations dans l'onduleur, puis celui qui maximise le temps d'apparition de la prochaine erreur.

13. Dispositif pour la mise en oeuvre dudit procédé selon l'une quelconque des revendications 1 à 12, **caractérisé en ce qu'**il comporte un onduleur de tension relié en amont à un bus continu, en aval à une charge électrique et connecté à une logique de commande, la logique de commande (4) mettant en oeuvre ledit procédé et produisant des vecteurs de commande de l'onduleur.

## Patentansprüche

1. Verfahren zur Steuerung eines Spannungswechselrichters, wobei der Wechselrichter dazu bestimmt ist, eine Last impulsbreitenmoduliert zu steuern, und vorne über einen Gleichstrombus mit einer Spannungsquelle und hinten mit einer elektrischen Last verbunden zu sein, mit den folgenden Schritten:
- Messung der Quellenspannung an einem Eingang des Wechselrichters,
- Vergleich des Messwerts der Quellenspannung mit einer Sollspannung;
**dadurch gekennzeichnet, dass** das Verfahren auch die folgenden Schritte aufweist:
- Ableitung von diesem Vergleich eines Quellenspannung-Augenblicksfehlers,
- Wahl eines Steuervektors des Wechselrichters, um den Quellenspannung-Augenblicksfehler in einem vorbestimmten Intervall ([min, max]) zu halten, und
- Anwendung des Steuervektors an den Wechselrichter.

2. Verfahren nach Anspruch 1, **dadurch gekennzeichnet, dass** das vorbestimmte Intervall symmetrisch und auf Null zentriert ist.

3. Verfahren nach einem der Ansprüche 1 bis 2, **dadurch gekennzeichnet, dass** zur Erzeugung der Steuerung des Wechselrichters das Verfahren die folgenden Schritte aufweist, wenn der Quellenspannung-Augenblicksfehler das vorbestimmte Intervall verlässt:
- Anwendung einer prädiktiven Strategie basierend auf einer vorbestimmten Modellierung der Impedanz des Gleichstrombusses, die die folgenden Schritte aufweist:
- Konfrontation der Modellierung der Impedanz des Gleichstrombusses mit den möglichen Steuervektoren,
- Wahl des Steuervektors, der es ermöglicht, den Quellenspannung-Augenblicksfehler in ein vorbestimmtes Intervall zurückzuführen.

4. Verfahren nach einem der Ansprüche 1 bis 3, **dadurch gekennzeichnet, dass** es Schritte einer Strom-prädiktiven Vektorsteuerung aufweist, darunter die folgenden Schritte:
- Messung der Phasenströme der Mehrphasenlast,
- Bestimmung eines Stromvektors in der Last ausgehend von den Messwerten der Ströme,
- Berechnung eines Stromvektorfehlers bezüglich eines Sollstromvektors,
- wenn der Stromvektorfehler eine vorbestimmte geometrische Struktur verlässt, das Verfahren die folgenden Schritte aufweist:
- Konfrontation der möglichen Steuervektoren mit einer Modellierung der Last,
- Wahl eines Steuervektors, der den Stromvektorfehler in die vorbestimmte geometrische Struktur zurückführt.

5. Verfahren nach einem der Ansprüche 1 bis 3, **dadurch gekennzeichnet, dass** es Schritte der Spannungsvektorsteuerung aufweist, darunter die folgenden Schritte:
- Messung der Ausgangsspannungen des Wechselrichters,
- Bestimmung eines Spannungsvektors bezüglich eines Sollvektors,
- Berechnung eines Spannungsfehlervektors,
- Umwandlung des Spannungsfehlervektors,
- wenn die Umwandlung des Spannungsfehlervektors eine vorbestimmte geometrische Struktur verlässt, das Verfahren die folgenden Schritte aufweist:
- Konfrontation der möglichen Steuervektoren mit der entsprechenden Entwicklung der Transformation des entsprechenden Fehlervektors,
- Wahl eines Steuervektors, der die Umwandlung des Spannungsvektorfehlers in die vorbestimmte geometrische Struktur zurückführt.

6. Verfahren nach Anspruch 5, **dadurch gekennzeichnet, dass** die Umwandlung ein Zeitintegral ist.

7. Verfahren nach den Ansprüchen 3 bis 6, **dadurch gekennzeichnet, dass** die vorbestimmte geometrische Struktur mindestens zwei Dimensionen aufweist.

8. Verfahren nach einem der Ansprüche 1 bis 2, **dadurch gekennzeichnet, dass** zur Erzeugung der Steuerung des Wechselrichters das Verfahren den folgenden Schritt aufweist, wenn der Quellenspannung-Augenblicksfehler das vorbestimmte Intervall verlässt:
- Anwendung einer Hysteresestrategie, die den folgenden Schritt aufweist:
- Wahl eines Steuervektors, der es bei seiner Anwendung erlaubt, eine Stromstufe am Eingang des Wechselrichters zu erzeugen, die die Änderungsrichtung der Quellenspannung korrigiert.

9. Verfahren nach Anspruch 8, **dadurch gekennzeichnet, dass** in Kenntnis des vorbestimmten Intervalls ([min, max]) und des Quellenspannung-Augenblicksfehlers (ΔU_{DC}) , mit Quellenspannungsfehler (ΔU_{DC}) =gemessene Spannung (U_{DC}) minus Sollspannung (U*_{DC}) , gilt
- wenn der Quellenspannungsfehler (ΔU_{DC}) höher als die oder gleich der Obergrenze (max) des vorbestimmten Intervalls ([min, max]) ist, das Verfahren einen Steuervektor wählt, der eine Erhöhung des Stroms erlaubt,
- wenn der Quellenspannungsfehler (ΔU_{DC}) niedriger als die oder gleich der Untergrenze (min) des vorbestimmten Intervalls ([min, max]) ist, das Verfahren einen Steuervektor wählt, der eine Verringerung des Stroms erlaubt.

10. Verfahren nach einem der Ansprüche 1, 2, 8 oder 9, **dadurch gekennzeichnet, dass** es Strom-Hysteresesteuerschritte aufweist, darunter die folgenden Schritte:
- Berechnung eines Stromfehlers für jeden Phasenstrom,
- Konfrontation des Stromfehlers mit einer Hysterese,
- wobei das Ergebnis der Konfrontation mit der Hysterese dann die Steuerung der entsprechenden Phase ist,
- wobei das Ergebnis der Wahl, die darauf abzielt, den Spannungsaugenblicksfehler im vorbestimmten Intervall zu halten, gegenüber dem Ergebnis der Konfrontation mit der Hysterese Vorrang hat.

11. Verfahren nach einem der Ansprüche 1 bis 10, **dadurch gekennzeichnet, dass** der Auswahlschritt einen Schritt der Konvergenzprüfung aufweist, der die Entwicklung des Fehlers prüft; wenn diese Entwicklung mit dem aktuellen Steuervektor in Richtung einer Korrektur des Fehlers ist, bleibt der Steuervektor unverändert.

12. Verfahren nach einem der Ansprüche 1 bis 7, **dadurch gekennzeichnet, dass**, wenn mehrere Steuervektoren wählbar sind, das Verfahren prioritär denjenigen, der die Anzahl von Umschaltungen im Wechselrichter minimiert, dann denjenigen auswählt, der die Zeit des Auftretens des folgenden Fehlers maximiert.

13. Vorrichtung zur Anwendung des Verfahrens nach einem der Ansprüche 1 bis 12, **dadurch gekennzeichnet, dass** sie einen Spannungswechselrichter aufweist, der vorne mit einem Gleichstrombus, hinten mit einer elektrischen Last verbunden und an eine Steuerlogik angeschlossen ist, wobei die Steuerlogik (4) das Verfahren anwendet und Steuervektoren des Wechselrichters erzeugt.

## Claims

1. Method of control of a voltage inverter, the inverter being intended to drive a load under pulse width modulation, and to be linked upstream to a voltage source via a DC bus and downstream to an electrical load, with the following steps:
- measurement of the source voltage at an input of the inverter,
- comparison of the measurement of the source voltage with a setpoint voltage; **characterized in that** the method also comprises the following steps:
- deduction from this comparison of an instantaneous error in source voltage,
- election of a control vector for the inverter so as to maintain the instantaneous error in source voltage within a predetermined interval ([min, max]), and
- application of the control vector to the inverter.

2. Method according to Claim 1, **characterized in that** the predetermined interval is symmetric and centred on zero.

3. Method according to one of Claims 1 to 2, **characterized in that** for the realization of the control of the inverter the method comprises the following steps if the instantaneous error in source voltage departs from the predetermined interval:
- implementation of a predictive strategy based on a predetermined modelling of the impedance of the DC bus comprising the following steps:
- contrasting of the modelling of the impedance of the DC bus with the possible control vectors,
- election of the control vector making it possible to restore the instantaneous error in source voltage to a predetermined interval.

4. Method according to one of Claims 1 to 3, **characterized in that** it comprises steps of predictive vectorial control in terms of current, among which are included the following steps:
- measurement of the phase currents of the polyphase load,
- determination of a vector of current in the load on the basis of the said measurements of the currents,
- calculation of a vectorial error in current with respect to a setpoint current vector,
- if the vectorial error in current departs from a predetermined geometric structure then the method comprises the following steps:
- contrasting of the possible control vectors with a modelling of the load,
- election of a control vector restoring the vectorial error in current to the predetermined geometric structure.

5. Method according to one of Claims 1 to 3, **characterized in that** it comprises steps of vectorial control in terms of voltage, among which are included the following steps:
- measurement of the output voltages of the inverter,
- determination of a voltage vector with respect to a setpoint vector,
- calculation of a voltage error vector,
- transformation of the voltage error vector,
if the transformation of the voltage error vector departs from a predetermined geometric structure then the method comprises the following steps:
- contrasting of the possible control vectors with the corresponding evolution of the transform of the corresponding error vector,
- election of a control vector restoring the transformation of the vectorial error in voltage to the predetermined geometric structure.

6. Method according to Claim 5, **characterized in that** the transformation is an integral over time.

7. Method according to Claims 3 to 6, **characterized in that** the predetermined geometric structure comprises at least two dimensions.

8. Method according to one of Claims 1 and 2, **characterized in that** for the realization of the control of the inverter the method comprises the following step if the instantaneous error in source voltage departs from the predetermined interval:
- implementation of a hysteretic strategy comprising the following step:
- election of a control vector making it possible upon its application to create a step change in current at the input of the inverter correcting the direction of variation of the source voltage.

9. Method according to Claim 8, **characterized in that** knowing the predetermined interval ([min, max]), and the instantaneous error in source voltage (ΔU_{DC}), with source voltage error (ΔU_{DC}) = measured voltage (U_{DC}) minus setpoint voltage (U*_{DC}), then
- if the source voltage error (ΔU_{DC}) is greater than or equal to the upper bound (max) of the predetermined interval ([min, max]), then the method elects a control vector allowing an increase in the current,
- if the source voltage error (ΔU_{DC}) is less than or equal to the lower bound (min) of the predetermined interval ([min, max]), then the method elects a control vector allowing a decrease in the current.

10. Method according to one of Claims 1, 2, 8 or 9, **characterized in that** it comprises steps of hysteretic control in current, among which are included the following steps:
- calculation for each phase current of an error in current,
- contrasting of the error in current with a hysteresis,
- the result of the contrasting with the hysteresis then being the control for the corresponding phase,
- the result of the election aimed at maintaining the instantaneous error in voltage within the predetermined interval prevailing over the result of the contrasting with the hysteresis.

11. Method according to one of Claims 1 to 10, **characterized in that** the election step comprises a convergence verification step verifying the evolution of the error, if this evolution is, with the present control vector, in the direction of a correction of the error then the control vector remains unchanged.

12. Method according to one of Claims 1 to 7, **characterized in that** if several control vectors are eligible, the method elects in a priority manner the one which minimizes the number of switchings in the inverter, and then the one which maximizes the time of occurrence of the next error.

13. Device for the implementation of the said method according to any one of Claims 1 to 12, **characterized in that** it comprises a voltage inverter linked upstream to a DC bus, downstream to an electrical load and connected to a control logic unit, the control logic unit (4) implementing the said method and producing control vectors for the inverter.
